# EUROPÄISCHE PATENTANMELDUNG

(11) **EP 3 453 560 A1**
(43) Veröffentlichungstag der Anmeldung: **13.03.2019**
(21) Anmeldenummer: 18193715.2
(22) Anmeldetag: 11.09.2018
(51) Int. Cl.: B60L 53/60

(54) **VERFAHREN UND ANORDNUNG FÜR EINEN AUSTAUSCH ELEKTRISCHER ENERGIE**

(30) Priorität: 12.09.2017 DE 102017216076
(71) Anmelder: Siemens Aktiengesellschaft, 80333 München (DE)
(72) Erfinder: Distler, Markus, 90419 Nürnberg (DE); Pfeifer, Christian, 91054 Erlangen (DE); Hafermaas, Jörg, 91056 Erlangen (DE); Hirsch, Annika, 96155 Buttenheim (DE); Rentschler, Alexander, 64625 Bensheim (DE)

(57) **Zusammenfassung**

Gegenstand der vorliegenden Erfindung ist ein Verfahren für einen Austausch elektrischer Energie, aufweisend die Schritte:
- Ermitteln eines Energiebedarfs eines ersten mobilen Energiespeichers, und
- Ermitteln einer geographischen Position des ersten mobilen Energiespeichers mittels eines ersten mobilen Endgeräts, und
- Übermitteln des Energiebedarfs und der geographischen Position des ersten mobilen Energiespeichers mittels des ersten mobilen Endgeräts an eine Datenbankanordnung, und
- Ermitteln mindestens eines zweiten Energiespeichers in geographischer Nähe zur Position des ersten mobilen Energiespeichers mittels der Datenbankanordnung, und
- Übermitteln der Position des zweiten Energiespeichers an das erste mobile Endgerät, und
- Senden eines Ladeanfragesignals mittels des ersten mobilen Endgeräts, und
- Senden eines Ladebestätigungssignals mittels eines zweiten mobilen Endgeräts, das dem zweiten Energiespeicher zugeordnet ist, und
- Laden des ersten mobilen Energiespeichers mit elektrischer Energie aus dem zweiten Energiespeichers,
dadurch gekennzeichnet, dass
als zweiter Energiespeicher ein mobiler Energiespeicher eingesetzt wird, und dass das Ermitteln des zweiten Energiespeichers mittels der Datenbankanordnung unter Berücksichtigung einer geographischen Position des zweiten Energiespeichers, die mittels des zweiten mobilen Endgeräts ermittelt wird, erfolgt.

Ferner ist eine entsprechende Anordnung für einen Austausch elektrischer Energie Gegenstand der Erfindung.

## Beschreibung

Die Erfindung betrifft ein Verfahren für einen Austausch elektrischer Energie gemäß dem Oberbegriff des Anspruchs 1 sowie eine Anordnung für einen Austausch elektrischer Energie gemäß dem Oberbegriff des Anspruchs 14.

Beim Betrieb von elektrischen Anlagen, welche nicht ortsfest sind und nicht an eine bestehende Infrastruktur zur permanenten Energieversorgung angeschlossen sind, kann es vorkommen, dass die zur Verfügung stehende Energie nicht ausreicht. Als Beispiele dienen im Rahmen der Elektromobilität das Liegenbleiben eines Elektroautos, Veranstaltungen an entlegenen Orten oder Notfälle, bei welchen kurzfristig große Mengen elektrische Energie zur Verfügung stehen müssen.

Ausgehend von bekannten Verfahren, beispielsweise zum Planen von Ladevorgängen für Elektroautos an öffentlichen Ladesäulen, stellt sich an die Erfindung die Aufgabe, ein Verfahren anzugeben, mit dem Energieempfänger bei Energiebedarf schnell und einfach auch in unbekannter Umgebung einen passenden Energielieferanten finden können.

Die Erfindung löst diese Aufgabe durch ein Verfahren für einen Austausch von Energie gemäß Anspruch 1.

In solchen Fällen eines lokalen, dringenden Bedarfs nach elektrischer Energie gibt es bisher keine Plattform bzw. Datenbank, welche eine Kommunikation zwischen Bedarfsträger und Anbieter - kurzfristig und mit Bezug zum Ort des Bedarfes - ermöglicht. Weiterhin ist es derzeit nicht möglich, gespeicherte elektrische Energie in mobilen Speichern für elektrische Verbraucher auf einer Plattform anzubieten. Derzeit ist keine technische Lösung für dieses Problem bekannt. Je nach Bedarf muss ein bestimmter Kommunikationskanal gewählt werden. Dadurch entsteht keine Flexibilität oder Komfort. Weiterhin ist kein Vergleich unterschiedlicher Quellen möglich.

Das Verfahren ist nicht auf Kapazitäten oder die Bedürfnisse der Elektromobilität fixiert, sondern kann auch für größere/längere Energiebedarfe als Plattform genutzt werden. Langfristig ergibt sich damit eine Liberalisierung auch im Ortsnetz da neben der "leitungsgebundenen Energie" nun auch "leitungsunabhängige Energie" gehandelt werden kann. Damit steht die fest installierte Energie-Infrastruktur im Wettbewerb mit mobiler Energie- Infrastruktur. Angebot und Nachfrage werden dann nicht mehr durch (monatliche) Lieferverträge mit best. Konditionen (€/kWh + Anschlusskosten), sondern hochdynamisch mit anderen technischen Merkmalen (Energiemenge kWh, max. Lieferleistung kW) geregelt. Die Analyse der Energieflüsse wird Bedarfe für den Zubau oder Rückbau der fest installierten Energie-Infrastruktur aufzeigen und damit Kosten einsparen.

Durch das derzeitige Fehlen einer Plattform, welche eine Auswahl von mobilen Energielieferanten und den direkten Austausch von elektrischer Energie ermöglicht, muss der Bedarfsträger spezifisch suchen und hat nur begrenzt die Möglichkeit, eine Auswahl bei mobiler Energiebereitstellung zu erhalten. Dasselbe gilt für Anbieter von elektrischer Energie aus mobilen Speichern.

Durch den direkten Kontakt zwischen Energieempfänger und Energielieferant sowie durch die Schaffung einer Plattform bzw. einer Datenbank mit einer flexiblen Auswahlmöglichkeit, lässt sich beispielsweise bei der Elektromobilität eine Lücke bei der Verfügbarkeit schließen sowie ein neues Geschäftsfeld in Summe erschließen. Die Teilnahme am Stromhandel ist heute nur ab einer bestimmten Energiemenge möglich, die weit über haushaltsübliche Energiemengen hinausgeht. Das hier vorgestellte Verfahren erlaubt hingegen einen Energiehandel auch von vergleichsweise geringen Energiemengen.

In einer bevorzugten Ausführungsform des erfindungsgemäßen Verfahrens wird elektrische Energie ausgetauscht. Bei den Energiespeichern handelt es sich in dieser Ausführungsform um Energiespeicher für elektrische Energie, also z.B. elektrochemische Energiespeicher wie etwa Batterien.

In einer bevorzugten Ausführungsform des erfindungsgemäßen Verfahrens wird ein Nachrichtenaustausch und/oder eine Sprachkommunikation zwischen dem ersten und dem zweiten mobilen Endgerät ermöglicht. Dies ist ein Vorteil, weil der Lieferant und der Empfänger beispielsweise Rückfragen klären, über einen Preis verhandeln oder einen Treffpunkt für den Ladevorgang ausmachen können. Weiterhin kann die Bezahlung mittels der Datenbank oder über ein direktes mobiles Zahlungssystem (peep-to-peer) erfolgen.

In einer bevorzugten Ausführungsform des erfindungsgemäßen Verfahrens wird mindestens eine technische Randbedingung für einen Energietransfer zusätzlich um ermittelten Energiebedarf übermittelt. Die technische Randbedingung ist beispielsweise eine der Randbedingungen: Anschlussform, Anschlussleistung, Steckertyp, Energiemenge (geringer als der tatsächliche Energiebedarf) .

In einer bevorzugten Ausführungsform des erfindungsgemäßen Verfahrens wird die Position des zweiten Energiespeichers und/oder mindestens eine technische Randbedingung in einer Kartendarstellung auf dem ersten mobilen Endgerät und/oder dem zweiten mobilen Endgerät dargestellt.

In einer bevorzugten Ausführungsform des erfindungsgemäßen Verfahrens wird der Preis für die angefragte Energiemenge des zweiten Energiespeichers auf dem ersten mobilen Endgerät dargestellt.

Die Applikation enthält beispielsweise die Daten angemeldeter Teilnehmer, welche einen Transfer von elektrischer Energie anbieten. Mittels deren Ortsangabe kann der Bedarfsträger durch in der Applikation eingestellter Kriterien nach Angebotsdetails der Anbieter (aktueller Ort, Kosten, Bewertung aus früheren Geschäften, Art der Schnittstelle, lieferbare Energiemenge) filtern und einen passenden Anbieter über die Applikation direkt kontaktieren, auch über eine Chat- oder Sprechfunktion in der Applikation selbst. Wenn der Transfer zustande gekommen ist, wird jeweils in der Applikation eine gegenseitige Bewertung vorgenommen, sowie die Bezahlung des Transfers durchgeführt.

In einer bevorzugten Ausführungsform des erfindungsgemäßen Verfahrens wird die geographische Position des zweiten Energiespeichers mittels des zweiten mobilen Endgeräts ermittelt. Dies ist Vorteilhaft, weil mobile Endgeräte wie Handys oder Tablets weit verbreitet sind und i.d.R. bereits über eine Positionsbestimmungseinrichtung wie etwa einen GPS-Sensor verfügen.

In einer bevorzugten Ausführungsform des erfindungsgemäßen Verfahrens wird das Ladeanfragesignal nur gesendet, wenn der zweite Energiespeicher den Energiebedarf des ersten Energiespeichers vollständig decken kann. Dies ist ein Vorteil, weil unvollständige Ladevorgänge i.d.R. für den Kunden mit einem unverhältnismäßigen Zeitaufwand verbunden sind. Außerdem wird durch unvollständige Ladevorgänge die Anzahl der Ladevorgänge der Energiespeicher erhöht, wodurch diese schneller an Leistung und damit Wert verlieren.

In einer bevorzugten Ausführungsform des erfindungsgemäßen Verfahrens wird als erster Energiespeicher ein Elektro- oder Hybridfahrzeug verwendet. Dies ist ein Vorteil, weil gerade Elektroautos oder Plug-in Hybride von Reichweitenproblemen betroffen sind. Beispielsweise gibt es derzeit noch keine mobilen Ladeeinrichtungen, die schnell zum Energieempfänger transportiert werden können, um ein an der Autobahn liegen gebliebenes Elektroauto wieder aufzuladen. Es kann nur abgeschleppt werden. Wird dagegen erfindungsgemäß ein mobiles Ladegerät bzw. ein zweiter Energiespeicher zum Elektroauto transportiert, so können Aufwände und Kosten eingespart werden. Denkbar ist ein peer-to-peer Laden, also ein direktes Laden eines Elektroautos mittels Kabel aus einem anderen Elektroauto, wenn beide Fahrzeuge dafür eingerichtet sind.

In einer bevorzugten Ausführungsform des erfindungsgemäßen Verfahrens wird als zweiter Energiespeicher eine mobile Ladestation für Elektro- oder Hybridfahrzeuge verwendet. Dies ist ein Vorteil, weil z.B. auch liegen gebliebene Elektrofahrzeuge geladen und damit nicht abgeschleppt werden müssen.

In einer bevorzugten Ausführungsform des erfindungsgemäßen Verfahrens wird als erster Energiespeicher ein mobiles Endgerät verwendet. Dies ist ein Vorteil, weil damit ein Energielieferant z.B. mit seinem Handy an einem Flughafen oder im Zug einem Energieempfänger bzw. dessen Handy Energie zukommen lassen kann. Ein peer-to-peer Verkauf von elektrischer Energie wird ermöglicht.

In einer bevorzugten Ausführungsform des erfindungsgemäßen Verfahrens wird als erster Energiespeicher ein Gebäude und/oder eine Außenanlage verwendet wird. Eine Außenanlage im Sinne der Erfindung ist auch eine Außenfläche. Dies ist ein Vorteil, weil beispielsweise in einer Bauphase, bei einem Stromausfall oder für ein Festivalgelände ohne Netzanschluss eine elektrische Energieversorgung sicher gestellt werden kann. Dies impliziert, dass der Lieferant der Energie mobil ist, der Bedarfsträger auch ortsfest sein kann.

In einer bevorzugten Ausführungsform des erfindungsgemäßen Verfahrens wird als zweiter Energiespeicher eine mobile Ladestation für mobile Endgeräte verwendet. Dies ist ein Vorteil, weil ein peer-to-peer Laden von z.B. Handys oder Tablets ermöglicht wird. Beispielsweise kann eine sog. Powerbank mit mehreren USB oder micro-usb Anschlüssen verwendet werden.

In einer bevorzugten Ausführungsform des erfindungsgemäßen Verfahrens wird der erste Energiespeicher zur geographischen Position des zweiten Energiespeichers bewegt.

In einer bevorzugten Ausführungsform des erfindungsgemäßen Verfahrens wird der zweite Energiespeicher zur geographischen Position des ersten Energiespeichers bewegt.

In einer bevorzugten Ausführungsform des erfindungsgemäßen Verfahrens werden der erste und der zweite Energiespeicher zu einer dritten geographischen Position bewegt. Dies ist ein Vorteil, weil beispielsweise eine Routeninformationen in Navigationsgeräten oder entsprechenden Apps, oder eine Zugverbindung oder eine Flugverbindung berücksichtigt werden können. Es können sich etwa Energielieferant und Energieempfänger an einem Flughafen treffen, weil beide nach Abflug am Heimatflughafen zu überlappenden Zeiträumen im Transitbereich eines dritten Flughafens sein werden.

In einer bevorzugten Ausführungsform des erfindungsgemäßen Verfahrens wird mittels eines der beiden mobile Endgeräte eine Route zum jeweils anderen mobilen Endgerät geplant.

In einer bevorzugten Ausführungsform des erfindungsgemäßen Verfahrens wird bei der Planung der Route die zur Verfügung stehende Reichweite des ersten und/oder des zweiten Energiespeichers berücksichtigt. Dies ist ein Vorteil, weil z.B. ein Liegenbleiben eines elektrisch angetriebenen Fahrzeugs verhindert wird.

In einer bevorzugten Ausführungsform des erfindungsgemäßen Verfahrens wird in Spitzenlastzeiten eines Energieversorgungsnetzes in der Nähe des ersten mobilen Energiespeichers der zweite Energiespeicher ausgewählt. Dies ist ein Vorteil, weil beispielsweise über den zweiten mobilen Energiespeicher eine Energieversorgung erfolgen kann, anstatt elektrische Energie aus dem Energieversorgungsnetz zu entnehmen. In der Nähe bezeichnet beispielsweise eine Distanz von bis zu einigen Dutzend km. Auf diese Weise kann der mobile zweite Energiespeicher zu Spitzenlastzeiten in einen direkten Wettbewerb mit anderen Energieträgern eintreten. Diese Energieträger bzw. Anbieter können beispielsweise Energie zur Heizenergiebereitstellung und/oder zur Brauchwassererwärmung an besonders kalten Wintertagen bereitstellen (Stromlieferung für Batteriespeicher statt Holz- bzw. Öllieferung).

In einer bevorzugten Weiterbildung der vorgenannten Ausführungsform des erfindungsgemäßen Verfahrens wird der zweite Energiespeicher eingesetzt, um in Spitzenerzeugungszeiten Abschaltungen von Erzeugeranlagen zu vermeiden. Abschaltungen von Energie-Erzeugeranlagen können nötig sein, wenn beispielsweise an einem sonnigen Tag mehr Solarenergie ins Energienetz eingespeist wird als verbraucht werden kann. Es ist ein Vorteil, dass diese Abschaltungen vermieden werden können. Es müssen zusätzliche Umweltinformationen berücksichtigt werden. Dabei kann es sich beispielsweise um eine Wettervorhersage mit Böen- bzw. Sturmwarnung handeln. Im Vorfeld werden dann an strategisch sinnvollen Stellen zusätzliche mobile Energiespeicher positioniert. Es kann z.B. an einer Windenergieanlage ein angeschlossener Batterieanhänger als zweiter Energiespeicher eingesetzt werden.

In einer bevorzugten Ausführungsform des erfindungsgemäßen Verfahrens wird der zweite Energiespeicher zur Zuschaltung eines trägen Verbrauchers verwendet, um dessen Einschaltstrom zu verringern. Dies ist ein Vorteil, weil damit die dynamische Belastung des Energienetzes verringert wird.

In einer bevorzugten Ausführungsform des erfindungsgemäßen Verfahrens wird als erster und/oder zweiter Energiespeicher ein Brennstoff verwendet. Bevorzugt ist es, wenn als Brennstoff zumindest einer der folgenden Brennstoffe eingesetzt wird: Holz, Holzpellets, Erdgas, Wasserstoffgas, Verflüssigter Wasserstoff. Es kann beispielsweise am Ort des ersten Energiespeichers eine Umwandlung des Brennstoffs des zweiten Energiespeichers in elektrische Energie für den ersten Energiespeicher erfolgen, indem z.B. mittels einer Brennstoffzelle elektrische Energie zum Laden einer Batterie gewonnen wird.

Ferner stellt sich an die Erfindung die Aufgabe, eine Anordnung anzugeben, mit dem Energieempfänger bei Energiebedarf schnell und einfach auch in unbekannter Umgebung einen passenden Energielieferanten finden können.

Die Erfindung löst diese Aufgabe durch eine Anordnung für einen Austausch elektrischer Energie gemäß Anspruch 14. Eine bevorzugte Ausführungsform ergibt sich aus Anspruch 15. Es ergeben sich sinngemäß die gleichen Vorteile wie eingangs für das erfindungsgemäße Verfahren erläutert.

Zur besseren Erläuterung der Erfindung ist ein bevorzugtes Ausführungsbeispiel des erfindungsgemäßen Verfahrens in der Figur dargestellt.

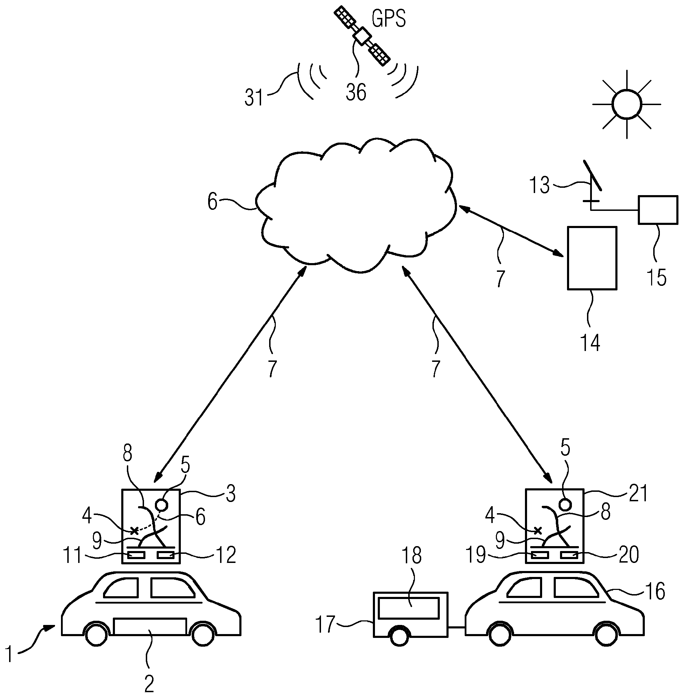

Die Figur 1 zeigt ein Elektroauto 1 mit einem ersten mobilen Energiespeicher 2, der eine geographische Position aufweist. Die geographische Position wird mittels GPS-Signalen 31 eines Satelliten 30 ermittelt. Benötigt das Elektroauto 1 elektrische Energie, so wird auf einem mobilen Endgerät 3 angezeigt, wo sich in einer Kartendarstellung mit Straßen 8, 9, 6 das eigene Fahrzeug 4 befindet. Weiterhin wird die Position 5 eines möglichen zweiten Energiespeichers bzw. Energielieferanten angezeigt, der zum Laden des ersten Energiespeichers geeignet ist. Der Weg 6 zum zweiten Energiespeicher wird angezeigt. Eine Taste 11 ist ausgelegt, eine Navigation zum zweiten Energiespeicher 5 zu starten. Eine Taste 12 ist dafür ausgelegt, ein Ladeanfragesignal zum laden des eigenen Energiespeichers 2 an den zweiten Energiespeicher bzw. das dortige mobile Endgerät zu senden.

Es ist eine Datenbankanordnung 6 vorgesehen, die über eine bidirektionale Datenkommunikationsverbindung 7 mit dem ersten mobilen Endgerät 3 verbunden ist. Die Datenbankanordnung 6 kann beispielsweise als eine Cloud-Applikation ausgebildet sein. Die Cloud-Applikation 6 ist damit eine reine Softwarekomponente, die auf einer verteilten Rechnerarchitektur betrieben wird. Die Datenkommunikationsverbindungen 7 können beispielsweise Mobilfunk- oder Internetverbindungen sein.

Mit der Datenbankanordnung 6 ist auch ein weiteres mobiles Endgerät 14 verbunden, das Energie einer ortsfesten Photovoltaikanlage 13 bzw. eines damit geladenen Energiespeichers 15 anbietet.

Ferner ist mit der Datenbankanordnung 6 ein mobiles Endgerät 21 verbunden, das zu einem Fahrzeug 16 mit Anhänger 17 gehört. Der Anhänger 17 weist einen mobilen Energiespeicher 18 auf. In dem mobilen Endgerät 21 werden ähnlich wie bei dem mobilen Endgerät 3 die Positionen der beiden Energiespeicher 2,18 sowie eine Straßenkarte angezeigt. Das mobile Endgerät 21 weist eine Taste 19 auf, die eine Navigation zum ersten mobilen Endgerät 3 starten kann. Eine weitere Taste 20 kann zum Senden eines Ladebestätigungssignals genutzt werden, um damit einen Verkauf elektrischer Energie seitens des mobilen Endgeräts 21 zum mobilen Endgerät 3 zu bestätigen.

Die mobilen Energiespeicher 2, 18 können beispielsweise als elektrochemische Batterien ausgebildet sein. Die mobilen Endgeräte 3, 14, 21 können beispielsweise Handys mit einem Touchscreen, Tablets oder fest eingebaute Navigationsgeräte eines Fahrzeugs sein.

Das erste mobile Endgerät 3 ist außerdem dafür ausgebildet, neben dem Energiebedarf auch die Art des benötigten Anschlusses bzw. Steckers für den Energiespeicher 2 zu übermitteln. Ferner werden im Display des mobilen Endgeräts 3 jeweils auch weiterführende Informationen zum Energielieferanten angezeigt. Beispielsweise wird neben der Position 5 der Name, die Art des zweiten Energiespeichers 18, die Ausprägung der Schnittstelle, die Entfernung in Kilometern, der vom Energielieferanten bzw. dessen mobilen Endgerät 21 angegebene Preis für die angefragte Energiemenge, die zeitliche Verfügbarkeit des möglichen zweiten Energiespeichers und ein Bewertungsfaktor angegeben. Der Bewertungsfaktor kann beispielsweise auf vorher durchgeführten Ladevorgängen und der Bewertung anderer Nutzer basieren und zum Beispiel in einer symbolhaften Darstellung 4 von 5 Sternen aufweisen.

Durch die Ermittlung der Entfernung der Energiespeicher 2,18 und der Rahmenbedingungen über die Art des Energiespeichers (Preis pro km für PkW-Batterie, Ladeanhänger) können die Gesamtenergiekosten ermittelt werden (Transaktion Energie, Transportkosten). Über dieses Verfahren können langfristig an strategisch sinnvollen Stellen mehr mobile Energiespeicher positioniert bzw. Bedarfe für festinstallierte Energieversorgung ermittelt werden.

Gerade bei dringender Nachfrage (Kurzzeitbedarf, Notbedarf) ergeben sich sinnvolle Anwendungen, da die Transportkosten sich den Energieträgerpreisen anpassen. Beispielsweise kann für ein Elektroauto, das an einer Autobahn liegen geblieben ist, mit einer Batteriekapazität von 100 kWh ein Energiepreis von 0,30 €/kWh vorgesehen werden. Wird entsprechend mittels des zweiten Energiespeichers eine komplette Ladung vorgenommen, so ergeben sich Kosten von 30 Euro. Hinzu kommt z.B. eine Entfernungspauschale in Höhe von 0,30 €/km. Bei einer Anfahrt von 50 km für den zweiten Energiespeicher und einer Rückfahrt von 50 km ergibt sich insgesamt eine Entfernungspauschale von 30 Euro.

Die Gesamtkosten für den Ladevorgang für den ersten Energiespeicher im Elektroauto belaufen sich in diesem Beispiel folglich auf 60 Euro.
Weiterhin soll es möglich sein, mit dem hier beschrieben Verfahren auch andere Arten von Energie oder Energieerzeugern zu vermitteln. So ist zum Beispiel auch die Zurverfügungstellung von Notstromaggregaten oder die Bereitstellung von Wasserstoff (z.B. für Brennstoffzellen) im Rahmen der Erfindung möglich.

In einem größeren Rahmen kann bei besonders hohem Bedarf auch weiteres Equipment wie etwa eine mobile Station, welche sich an das Versorgungsnetz ankoppelt, vermittelt werden. Dies geht über Aspekt des Energiespeicherns hinaus; vielmehr hin zu einer kurzzeitigen stationären Versorgung. Dabei sind beide Parteien - also Energielieferant und Energieabnehmer jedoch stets mobil, der Bedarf ist kurzfristig und die Versorgung ist nur temporär.

## Patentansprüche

1. Verfahren für einen Austausch von Energie,
aufweisend die Schritte:
- Ermitteln eines Energiebedarfs eines ersten mobilen Energiespeichers (2), und
- Ermitteln einer geographischen Position des ersten mobilen Energiespeichers (2) mittels eines ersten mobilen Endgeräts (3), und
- Übermitteln des Energiebedarfs und der geographischen Position des ersten mobilen Energiespeichers (2) mittels des ersten mobilen Endgeräts (3) an eine Datenbankanordnung (6), und
- Ermitteln mindestens eines zweiten Energiespeichers (18) in geographischer Nähe zur Position des ersten mobilen Energiespeichers (2) mittels der Datenbankanordnung (6), und
- Übermitteln der Position des zweiten Energiespeichers (18) an das erste mobile Endgerät (3), und
- Senden eines Ladeanfragesignals mittels des ersten mobilen Endgeräts (3), und
- Senden eines Ladebestätigungssignals mittels eines zweiten mobilen Endgeräts (21), das dem zweiten Energiespeicher (18) zugeordnet ist, und
- Laden des ersten mobilen Energiespeichers (2) mit elektrischer Energie aus dem zweiten Energiespeicher (18),
**dadurch gekennzeichnet, dass**
als zweiter Energiespeicher (18) ein mobiler Energiespeicher eingesetzt wird, und dass
das Ermitteln des zweiten Energiespeichers (18) mittels der Datenbankanordnung (6) unter Berücksichtigung einer geographischen Position des zweiten Energiespeichers (18) erfolgt.

2. Verfahren nach Anspruch 1, **dadurch gekennzeichnet, dass** die geographische Position des zweiten Energiespeichers (18) mittels des zweiten mobilen Endgeräts (21) ermittelt wird.

3. Verfahren nach Anspruch 1 oder 2, **dadurch gekennzeichnet, dass** das Ladeanfragesignal nur gesendet wird, wenn der zweite Energiespeicher (18) den Energiebedarf des ersten Energiespeichers (2) vollständig decken kann.

4. Verfahren nach einem der vorhergehenden Ansprüche, **dadurch gekennzeichnet, dass** als erster Energiespeicher (2) ein Elektro- oder Hybridfahrzeug (1) verwendet wird.

5. Verfahren nach einem der vorhergehenden Ansprüche, **dadurch gekennzeichnet, dass** als zweiter Energiespeicher (18) eine mobile Ladestation (17) für Elektro- oder Hybridfahrzeuge verwendet wird.

6. Verfahren nach einem der vorhergehenden Ansprüche, **dadurch gekennzeichnet, dass** als erster Energiespeicher ein mobiles Endgerät verwendet wird.

7. Verfahren nach einem der vorhergehenden Ansprüche, **dadurch gekennzeichnet, dass** als erster Energiespeicher ein Gebäude und/oder eine Außenanlage verwendet wird.

8. Verfahren nach einem der vorhergehenden Ansprüche, **dadurch gekennzeichnet, dass** als zweiter Energiespeicher eine mobile Ladestation für mobile Endgeräte verwendet wird.

9. Verfahren nach einem der vorhergehenden Ansprüche, **dadurch gekennzeichnet, dass** der erste Energiespeicher (2) zur geographischen Position des zweiten Energiespeichers (18) bewegt wird.

10. Verfahren nach einem der vorhergehenden Ansprüche, **dadurch gekennzeichnet, dass** der zweite Energiespeicher (18) zur geographischen Position des ersten Energiespeichers (2) bewegt wird.

11. Verfahren nach einem der vorhergehenden Ansprüche, **dadurch gekennzeichnet, dass** der erste und der zweite Energiespeicher (2,18) zu einer dritten geographischen Position bewegt werden.

12. Verfahren nach einem der vorhergehenden Ansprüche, **dadurch gekennzeichnet, dass** mittels eines der beiden mobilen Endgeräte (3,21) eine Route zum jeweils anderen mobilen Endgerät (3,21) geplant wird.

13. Verfahren nach Anspruch 12, **dadurch gekennzeichnet, dass** bei der Planung der Route die zur Verfügung stehende Reichweite des ersten und/oder des zweiten Energiespeichers (2,18) berücksichtigt wird.

14. Anordnung für einen Austausch von Energie,
aufweisend:
- einen ersten mobiler Energiespeicher (2), der zum Laden mit elektrischer Energie aus einem zweiten Energiespeicher (18) ausgebildet ist, und
- ein erstes mobiles Endgerät (3), das zum Ermitteln eines Energiebedarfs und einer geographischen Position des ersten mobilen Energiespeichers (2) und das zum Übermitteln des Energiebedarfs und der geographischen Position des ersten mobilen Energiespeichers (2) an eine Datenbankanordnung (6) ausgebildet ist, wobei das erste mobile Endgerät (3) zum Senden eines Ladeanfragesignals ausgebildet ist,
- den zweiten Energiespeicher (18), der in geographischer Nähe zur Position des ersten Energiespeichers (2) angeordnet ist,
- die Datenbankanordnung (6), die zum Ermitteln des zweiten Energiespeichers (18) ausgebildet ist, und
- eine zweites mobiles Endgerät (21), das dem zweiten Energiespeicher (18) zugeordnet und zum Senden eines Ladebestätigungssignals ausgebildet ist,
**dadurch gekennzeichnet, dass**
der zweite Energiespeicher (18) ein mobiler Energiespeicher ist, und dass die Datenbankanordnung (6) dafür ausgebildet ist, den zweiten Energiespeicher (18) unter Berücksichtigung der geographischen Position des zweiten Energiespeichers (18) zu ermitteln.

15. Anordnung nach Anspruch 14, **dadurch gekennzeichnet, dass** das zweite mobile Endgerät (21) dafür ausgebildet ist, die geographische Position des zweiten Energiespeichers (21) zu ermitteln.
